# EUROPÄISCHE PATENTSCHRIFT

(11) **EP 1 090 824 B1**
(45) Veröffentlichungstag und Bekanntmachung des Hinweises auf die Patenterteilung: **18.08.2004**
(21) Anmeldenummer: 99124863.4
(22) Anmeldetag: 15.12.1999
(51) Int. Cl.: B61D 45/00, B60P 7/12

(54) **Güterzugwagen mit Ladungssicherung, insbesondere für Jumbo-Tiefdruckrollen**
Railway goods wagon with load securing, especially for jumbo gravure paper rolls
Wagon à marchandises avec fixation de charge, notamment pour rouleaux géants de papier héliographique

(30) Priorität: 04.10.1999 DE 29917373 U
(43) Veröffentlichungstag der Anmeldung: 11.04.2001
(73) Patentinhaber: Rail & Sea Speditions-GmbH, 5204 Strasswalchen (AT)
(72) Erfinder: Greisberger, Robert, 5204 Strasswalchen (AT)
(74) Vertreter: Stenger, Watzke & Ring Patentanwälte

(56) Entgegenhaltungen:
- EP-A- 0 982 188
- DE-U- 29 815 736
- GB-A- 2 167 354
- NL-A- 7 609 721
- US-A- 5 193 700
- US-A- 5 425 608

## Beschreibung

Die Erfindung betrifft einen Güterzugwagen mit den Merkmalen des Oberbegriffs des Anspruchs 1. Derartige Güterzugwagen sind beispielsweise aus der EP-A-0 982 188 unter Artikel 54(3) EPÜ zitiert bzw. der DE-U-298 15 736 bekannt.

Für die Erstellung von Druckschriften, insbesondere Magazinen und Zeitschriften, werden Tiefdruckpapierrollen, auch Tiefdruckrollen genannt, gebraucht, die unterschiedliche Maße aufweisen können. Dabei bereitet der Transport insbesondere dann Schwierigkeiten, wenn die Tiefdruckrollen größere Maße aufweisen, etwa Breiten von 2,30 m bis 3,60 m, Durchmesser von 1,15 m bis 1,35 m und Gewichte von 3.500 kg bis 6.000 kg. Derartige "Jumbo"-Tiefdruckrollen werden bislang mit Greifwerkzeugen liegend im Eisenbahnwaggon schienenparallel angeordnet, wobei nachteiligerweise ein gewaltiger Aufwand an Zeit und Sicherungsmaterial aufgewendet werden muß und trotzdem die Gefahr gegeben ist, dass die Tiefdruckrollen beschädigt werden. Es müssen nämlich vor der Beladung des Eisenbahnwaggons zuvor zwei Haltegurte als Ladungssicherung am Boden ausgelegt werden, auf denen sodann die zwei Tiefdruckrollen schienenparallel nebeneinander angeordnet werden, um mit diesen Haltegurten zu einem Paket zusammengebunden zu werden. Anschließerid werden nochmals zwei Gurte über die beiden Tiefdruckrollen gespannt, wobei diese Gurte in Ösen beiderseits des Waggonbodens befestigt sind. Über den erkennbaren Nachteil des hohen Zeitaufwandes, der für eine derartige Beladung und Sicherung des Ladegutes zu leisten ist, ist vor allem nachteilig, dass die Spanneinrichtungen der Gurte sich in das Papier der Tiefdruckrollen eindrücken oder auf den Rollen aufgrund der Transportbewegungen scheuern, so dass die Tiefdruckrollen beschädigt werden. Darüberhinaus ist als Kostenfaktor nachteilig, dass zwischen 24 und 36 Gurte je Güterzugwagen zur Ladungssicherung benötigt werden, die darüberhinaus einem Verschleiß unterliegen.

Der Erfindung liegt die **Aufgabe** zugrunde, einen Transport von Tiefdruckrollen größerer Breiten in Güterzugwagen schienenparallel in technisch einfacher Weise, kostengünstig und zeitoptimiert unter Meidung der oben beschriebenen Nachteile zu ermöglichen, wobei ein beschädigungsfreies Handling und Transportieren sichergestellt sein sollen.

Die Aufgabe ist bei einem Güterzugwagen der eingangs genannten Art durch die Merkmale des Anspruchs 1 gelöst.

Nach der Erfindung ist vorgesehen, dass zu jeder Einstecköffnung in Querrichtung zur Bodenplattform-Mitte hin weitere Einstecköffnungen, vorzugsweise zwei weitere Einstecköffnungen, vorhanden sind, so dass die Keile von beiden Seiten her flexibel entsprechend dem Durchmesser der zu transportierenden Rollen auf der Bodenplattform angeordnet werden können.

Gemäß der Erfindung kann eine noch feinere Anpassung an die abmessungsmäßigen Gegebenheiten dadurch erzielt werden, daß die Keile unabhängig von ihrer Einsteckposition noch in sich in Querrichtung verstellbar sind. In der konkreten Ausgestaltung weisen die Keile jeweils eine auf der Bodenplattform aufliegende und wenigstens mit einem Verankerungssteckelement versehene Trägerplatte auf, auf welcher ein die Oberseite der Keile ausbildendes Keilelement über eine an der Trägerplatte angeordnete Verstelleinrichtung in Querrichtung des Wagens verschiebbar geführt und an der Trägerplatte arretierbar ist. Vorteilhafterweise ist die Verstelleinrichtung eine Spindel, welche das die Oberseite ausbildende Keilelement nach Art eines Schlittens auf der Trägerplatte führt.

Als besonders zweckmäßig hat sich in Weiterentwicklung der Erfindung herausgestellt, jede Einstecköffnung durch ein in der Bodenplattform bündig eingearbeitetes, nach unten sich erstreckendes Formrohr auszubilden und als Verankerungssteckelement an jedem Keil ein dazu passendes Formrohr vorzusehen. In der konkreten Ausgestaltung weist das die Einstecköffnung bildende Formrohr jeweils einen quadratischen Querschnitt mit einer Kantenlänge von 90 mm auf und hat das das Verankerungssteckelement des Keils bildende Formrohr einen passenden quadratischen Querschnitt mit einer Kantenlänge von 80 mm, so daß ein einerseits leicht steckbares und andererseits ausreichend spielfreies System zur Ladungssicherung bereitgestellt ist. Zweckmäßigerweise kann dabei das Verankerungsteckelement des Keils an der Unterseite des Keils bzw. der Trägerplatte des Keils angeschweißt sein und ist die Oberseite des Keils entsprechend der Rundung des Transportguts gebogen, wobei der Keil selbst insgesamt aus Eisenwerkstoff besteht.

Gemäß der Erfindung sind in der Trägerplatte schienenparallel eine Mehrzahl von Durchstecköffnungen im Abstand zueinander ausgebildet und angeordnet, durch die weiteren Verankerungssteckelemente in die Einstecköffnungen des Wagens zum Festlegen der Trägerplatte steckbar sind. Vorteilhaftersweise sind die weiteren Verankerungssteckelemente Bolzen, welche mit einem Sicherungselement in den Einstecköffnungen des Güterzugwagens arretierbar sind. Durch die Durchstecköffnungen in der Trägerplatte ist diese an die mitunter unterschiedlichen Abstände der Einstecköffnungen in der Bodenplatte eines Güterzugwagens anpassbar, wobei die Durchstecköffnungen in der Trägerplatte untereinander vorteilhafterweise ungleichmäßige Abstände aufweisen.

In einer zweckmäßigen Ausgestaltung der Erfindung wird vorgeschlagen, daß die Halteeinrichtungen für das Spanngurtsystem in der Bodenplattform versenkte Rollen oder Ösen sind, über die ein Spanngurt mit einem Gurtverlauf ausschließlich oberhalb der Tiefdruckpapierrollen in Querrichtung zur Ladungssicherung gespannt ist. Hierzu kann das Spanngurtsystem jeweils mit einer in der Bodenplattform versenkt angeordneten Ratsche kombiniert sein.

Insgesamt ist mit der Erfindung eine Ladungssicherung für Jumbo-Tiefdruckrollen im Eisenbahnwaggon geschaffen worden, die ein direktes Aufrollen - ohne darunter angeordnete Gurte - auf die Bodenplattform des Waggons von einer Seite her ermöglicht, wobei ein Überrollen durch die auf der gegenüberliegenden Seite bereits angeordneten Keile unmöglich ist. Nach der Beladung des Waggons werden zur Ladungssicherung auch auf der Beladeseite die erforderlichen Keile verteilt über die gesamte Längsseite in die Einstecköffnungen gesteckt und wird über die Feineinstellung sichergestellt, daß die Oberseite jedes Keils dicht an der benachbarten Tiefdruckrolle anliegt. Anschließend findet die Überspannung der Rollen durch die integrierten Gurte des Spanngurtsystems statt.

Weitere Einzelheiten, Merkmale und Vorteile des Gegenstandes der Erfindung ergeben sich aus der nachfolgenden Beschreibung der zugehörigen Zeichnungen, in denen bevorzugte Ausführungsbeispiele der Erfindung schematisch dargestellt sind. In den Zeichnungen zeigen:
- Fig. 1: einen Güterzugwagen in schematisierter perspektivischer Ansicht der Grundelemente;
- Fig. 2: einen Keil in schematisierter Seitenansicht;
- Fig. 3: den Keil der Fig. 2 in Steckposition vor der Verankerung in einer Einstecköffnung, perspektivisch (ohne die Trägerplatte);
- Fig. 4: den Keil der Fig. 3 in einer Steckposition auf der Bodenplattform, perspektivisch;
- Fig. 5: die Trägerplatte eines Keils in einer schematisierten Draufsicht;
- Fig. 6: die Trägerplatte gemäß Fig. 5 in einer schematisierten Seitenansicht (ohne das Verankerungssteckelement);
- Fig. 7: die Trägerplatte gemäß Fig. 5 in einer weiteren schematisierten Seitenansicht (ohne das Verankerungssteckelement);
- Fig. 8: ein Keilelement in einer schematisierten Seitenansicht;
- Fig. 9: das Keilelement gemäß Fig. 8 in einer schematisierten Seitenansicht;
- Fig. 10: das Keilelement gemäß Fig. 8 in einer schematisierten Ansicht von unten;
- Fig. 11: in einer schematisierten Seitenansicht einen Ausschnitt eines auf einer Trägerplatte gemäß Fig. 6 angeordneten Keilelements gemäß Fig. 8;
- Fig. 12: eine schematisierte Seitenansicht gemäß Fig. 11;
- Fig. 13: eine Seitenansicht ladungsgesicherter Tiefdruckrollen;
- Fig. 14: eine Seitenansicht einer ersten Ausführungsform eines weiteren Verankerungsteckelements;
- Fig. 15: eine Draufsicht auf eine Durchstecköffnung einer Trägerplatte gemäß Fig. 14;
- Fig. 16: eine Seitenansicht einer zweiten Ausführungsform eines weiteren Verankerungssteckelementes und
- Fig. 17: eine Draufsicht auf eine Durchstecköffnung einer Trägerplatte gemäß Fig. 16.

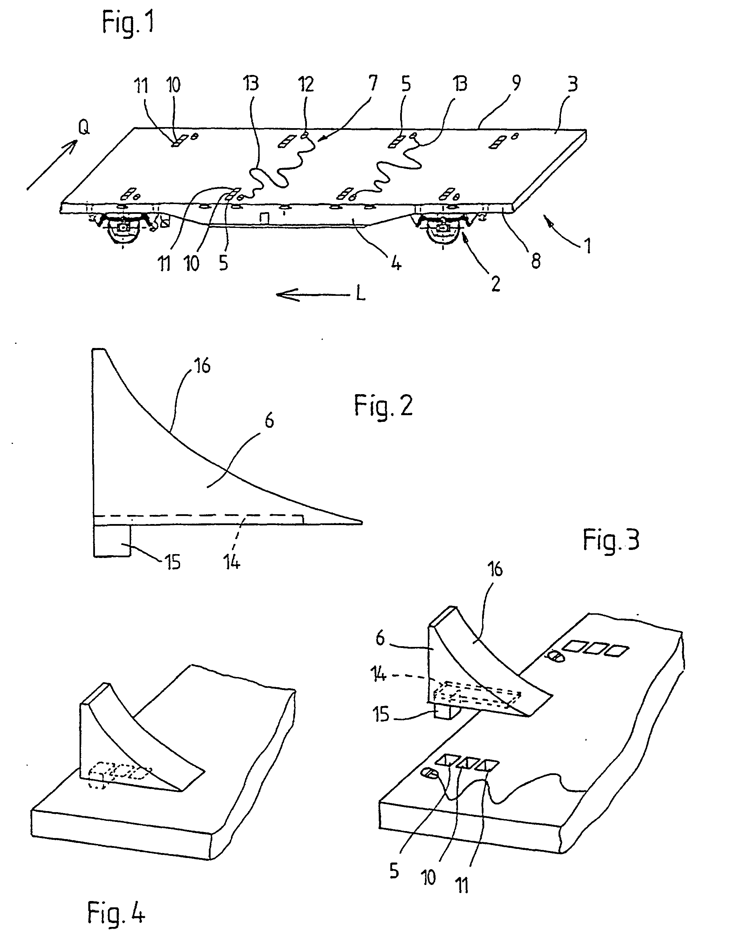

Der in Fig. 1 der Zeichnung schematisch dargestellte Güterzugwagen 1 weist ein Laufwerk 2 und ein eine Bodenplattform 3 tragendes Untergestell 4 auf. Ein derartiger Güterzugwagen 1 besitzt eine Breite von mindestens 2,30 m und ist damit geeignet, in schienenparalleler Anordnung zwei Tiefdruckrollen nebeneinander liegend aufzunehmen, die einen Durchmesser von mindestens 1,15 m und Breiten von 2,30 m bis 3,60 m aufweisen. Um die Tiefdruckrollen gegen Verlagerungen während des Transportes zu sichern, ist der Güterzugwagen 1 der Fig. 1 mit der nachfolgend beschriebenen Einrichtung zur Ladungssicherung ausgestattet:

Die Einrichtung zur Ladungssicherung besteht kurz gefaßt aus Einstecköffnungen 5, Keilen 6 zur Verankerung in den Einstecköffnungen 5 und einem Spanngurtsystem 7, die insgesamt kombinativ dazu dienen, die horizontal nebeneinander auf der Bodenplattform 3 schienenparallel angeordneten Tiefdruckpapierrollen in ihrer Ladeposition zu halten und zu sichern. Dazu sind die Einstecköffnungen 5 in Abständen von jeweils 1500 mm zueinander an beiden Längsseiten 8, 9 in der Bodenplattform 3 ausgebildet, und zwar durch ein jeweils in die Bodenplattform 3 bündig eingearbeitetes, nach unten in das Untergestell 4 etwa 230 mm sich erstreckendes, im Querschnitt quadratisches Eisen-Formrohr. Zusätzlich sind zur Anpassung an variierende Durchmesser der Tiefdruckrollen in Querrichtung Q zur Bodenplattform-Mitte hin zu jeder Einstecköffnung 5 zwei weitere Einstecköffnungen 10, 11 gleicher Ausbildung vorgesehen.

Das zugehörige Spanngurtsystem 7 ist in die Bodenplattform 3 bzw. das Untergestell 4 integriert und besteht aus einander gegenüberliegend an den Längsseiten 8 und 9 angeordneten, in die Bodenplattform 3 eingearbeiteten Ösen 12 mit einem in Querrichtung Q verspannbaren Gurt 13 und einer in der Zeichnung nicht erkennbaren, im Untergestell 4 versenkt angeordneten Ratsche, die in einfacher Weise ein Spannen und Lösen des Gurtes 13 ermöglicht. An dem dargestellten Güterzugwagen 1 sind insgesamt vier solcher Spanngurtsysteme 7 entsprechend der Zahl der korrespondierenden Einstecköffnungen 5 vorhanden.

Mit den beschriebenen Einstecköffnungen 5 bzw. 10 und 11 der Einrichtung zur Ladungssicherung wirken die Keile 6 gemäß Fig. 2, 3 und 4 zusammen. Jeder Keil 6 besteht aus Eisen und weist an seiner Unterseite 14 ein Verankerungssteckelement 15 auf, welches in Form und Größe mit den Einstecköffnungen 5, 10 und 11 zum leichten Einstecken und Entnehmen korrespondiert. Im konkreten Ausführungsbeispiel besteht das Verankerungssteckelement 15 aus einem Formrohr quadratischen Querschnitts mit einer Kantenlänge von 80 mm und einer Längserstreckung von 100 mm, so daß die Passung zum die Einstecköffnung 5 bzw. 10 und 11 bildenden Formrohr quadratischen Querschnitts und einer Kantenlänge von 90 mm gewährleistet ist. Die Verbindung des Verankerungssteckelementes 15 zur Unterseite 14 ist durch Schweißen hergestellt.

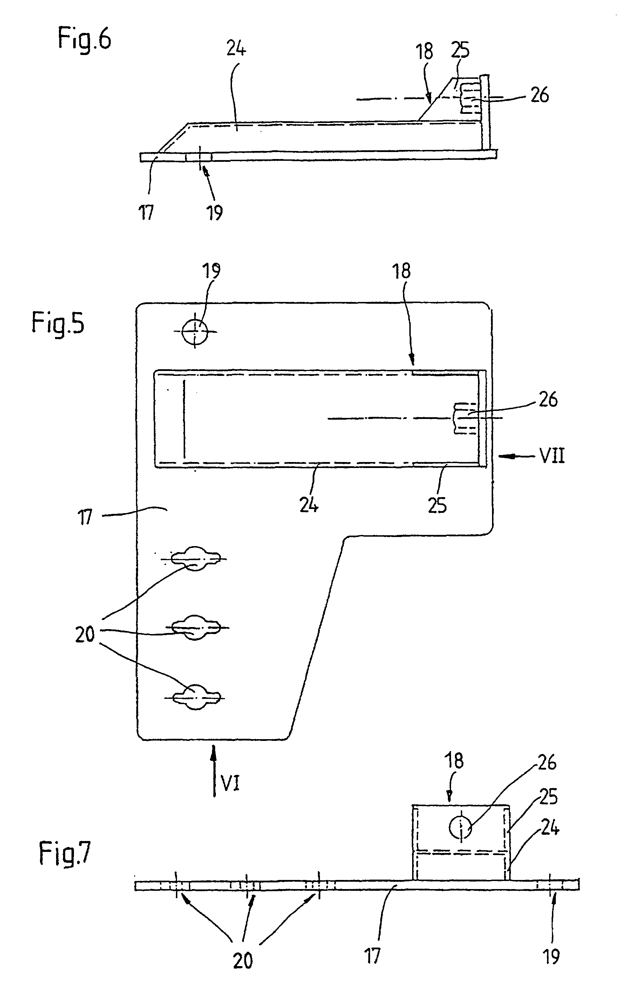

Die Oberseite 16 des Keils 6 ist schalenförmig entsprechend der Rundung der Tiefdruckrollen gebogen, wobei zusätzlich in Querrichtung eine Feinverstelleinrichtung dadurch gegeben ist, daß der Keil 6 - wie in Fig. 2 der Zeichnung gestrichelt angedeutet ist - in einer Führung verschiebbar und arretierbar ist, wie nachfolgend im Zusammenhang mit den Fig. 5 bis 12 näher erläutert.

Die drei verschiedenen Steckpositionen des Keils 6 ergeben sich aus den Fig. 3 und 4, die erkennen lassen, daß in einfacher Weise der Abstand zweier in Querrichtung Q korrespondierender Keile 6 in Richtung Waggonmitte variabel gehalten ist, wobei über die keileigene Feineinstellung noch eine genauste Anpassung an die Breite des Ladegutes möglich ist.

Die Fig. 5, 6 und 7 zeigen in verschiedenen schematischen Ansichten eine sich an der Unterseite 14 eines Keils 6 befindliche Trägerplatte 17, welche auf der Bodenplattform 3 des Güterzugswagens 1 aufliegend anordbar ist. Die Trägerplatte 17 weist eine nachfolgend noch näher zu erläuternde Verstelleinrichtung 18 auf, mittels welcher ein die Oberseite eines Keils 6 ausbildendes Keilelement in Querrichtung Q des Güterzugwagens 1 verschiebbar geführt und an der Trägerplatte 17 arretierbar ist. In der Trägerplatte 17 sind in Längsrichtung L, also schienenparallel, eine Durchstecköffnung 19 und drei Durchstecköffnungen 20 voneinander beabstandet ausgebildet und angeordnet, durch die Verankerungssteckelemente in die Einstecköffnungen 5 bzw. 10 und 11 des Güterzugwagens 1 zum Festlegen der Trägerplatte 17 steckbar sind.

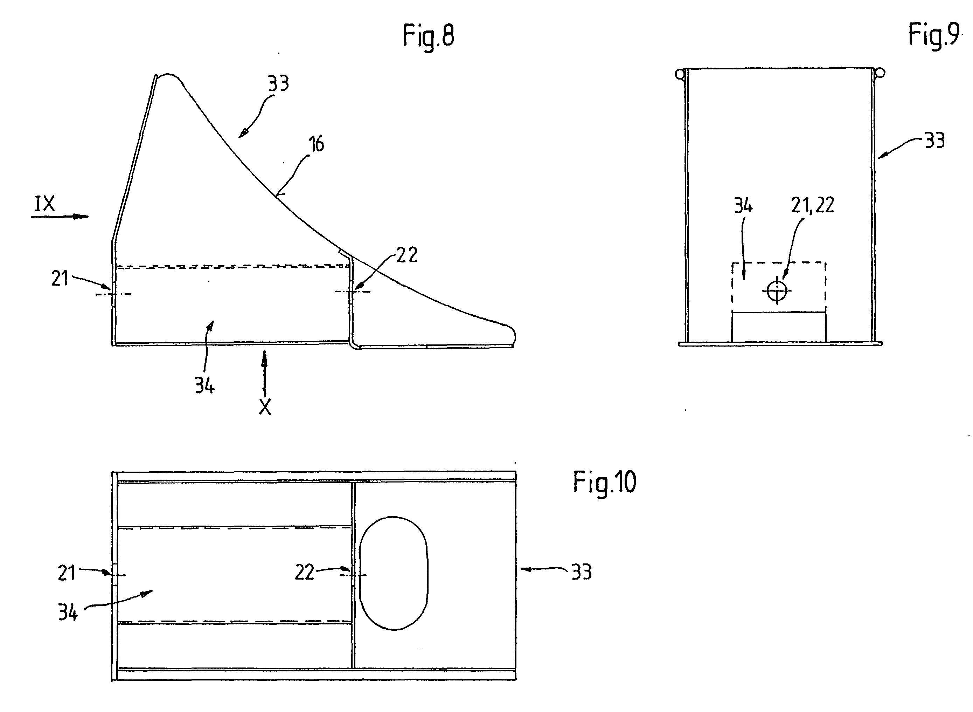

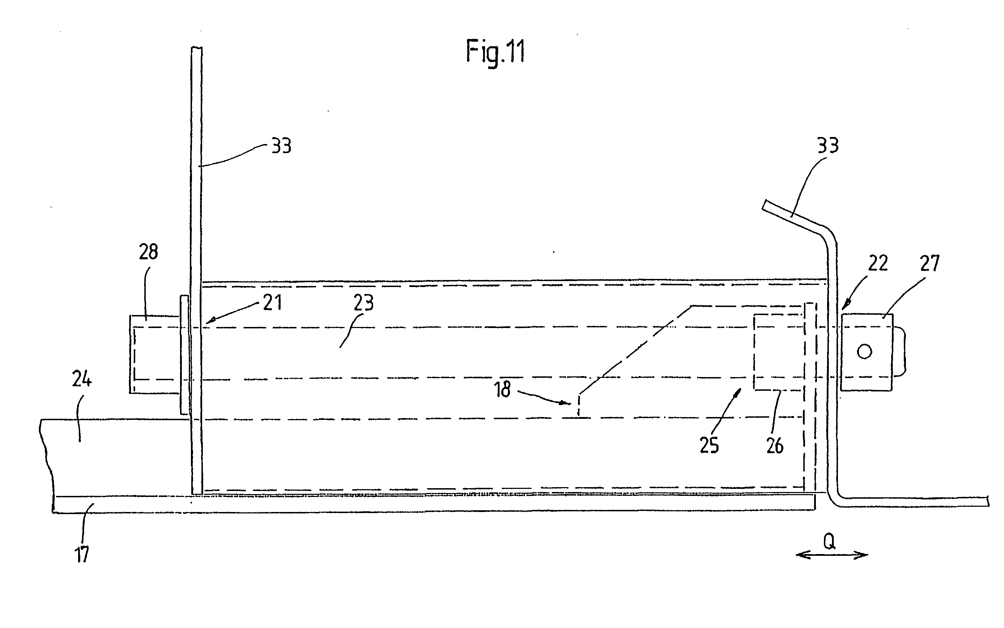

In den Fig. 8, 9 und 10 ist in verschiedenen schematischen Ansichten ein die Oberseite eines Keils 6 ausbildendes Keilelement 33 dargestellt. Die den Tiefdruckrollen zugewandte Oberseite 16 des Keilelements 33 ist entsprechend der Rundung der Tiefdruckrollen gebogen ausgebildet. Im Inneren weist das Keilelement 33 eine den Abmessungen der Verstelleinrichtung 18 der Trägerplatte 17 korrespondierend ausgebildete Ausnehmung 34 auf, welche in Querrichtung Q einander gegenüberliegende Öffnungen 21 und 22 zur Aufnahme einer Spindel 23 der Verstelleinrichtung 18 umfaßt, wie in Fig. 11 dargestellt.

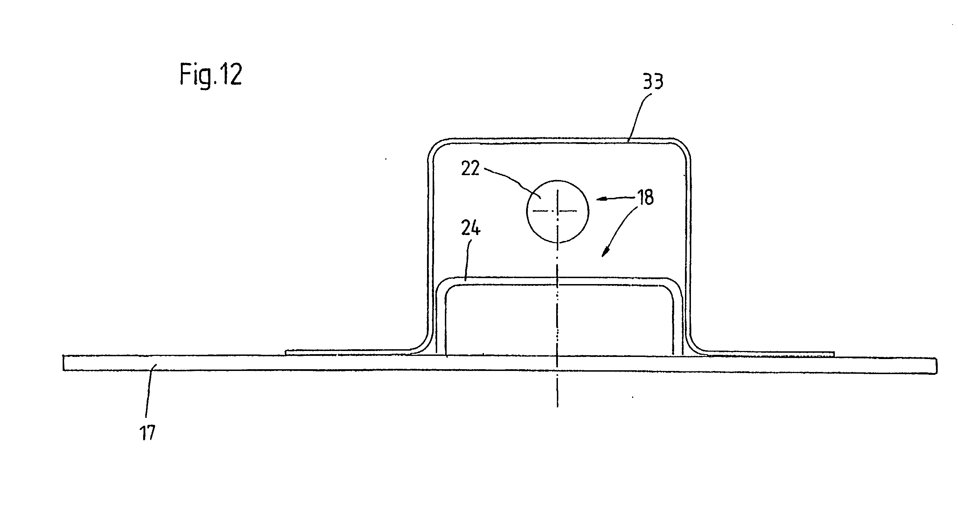

Fig. 11 zeigt in einer Seitenansicht einen Ausschnitt eines Keilelements 33 gemäß den Fig. 8, 9 und 10, welches auf einer Trägerplatte 17 gemäß den Fig. 5, 6 und 7 angeordneten Verstelleinrichtung 18 in Querrichtung Q des Güterzugwagens 1 verschiebbar geführt ist. Die Verstelleinrichtung 18 umfaßt eine Führungsschiene 24, welche hinsichtlich ihrer seitlichen Abmessungen an die Ausnehmung 34 des Keilelements 33 angepaßt ist. An dem in Fig. 11 rechts gelegenen Ende weist die Verstelleinrichtung 18 eine oberhalb der Führungsschiene 24 befindliche Führungsaufnahme 25 für eine Spindelstange 23 auf, welche eine Bohrung mit einem ein Gewinde aufweisenden Abschnitt 26 aufweist, in welchem ein korrespondierendes Gewinde der Spindelstange 23 gelagert ist. Die Spindelstange 23 ist durch die Öffnungen 21 und 22 des Keilelements 33 hindurchgeführt. An dem in Fig. 11 rechts gelegenen Ende der Spindelstange 23 ist diese gegen ein Herausrutschen aus der Öffnung 22 des Keilelements 33 mit einem Sicherungselement 27 versehen, an dem gegenüberliegenden Ende der Spindelstange 23 ist eine mit dem Gewinde der Spindelstange 23 korrespondierende Mutter 28 angeordnet, durch deren Drehung die Spindelstange 23 über die Verstelleinrichtung 18 in Querrichtung Q des Güterzugwagens 1 hin und her verschiebbar ist. Darüberhinaus ermöglicht die Verstelleinrichtung 18 so ein Arretieren des Keilelements 33 an der Trägerplatte 17 bzw. der an der Trägerplatte 17 fest angeordneten Verstelleinrichtung 18. Fig. 12 zeigt eine Seitenansicht der Anordnung gemäß Fig. 11, wobei hier zusätzlich ersichtlich ist, daß die Führungsschiene 24 der Verstelleinrichtung 18 an der Trägerplatte 17 angeschweißt ist.

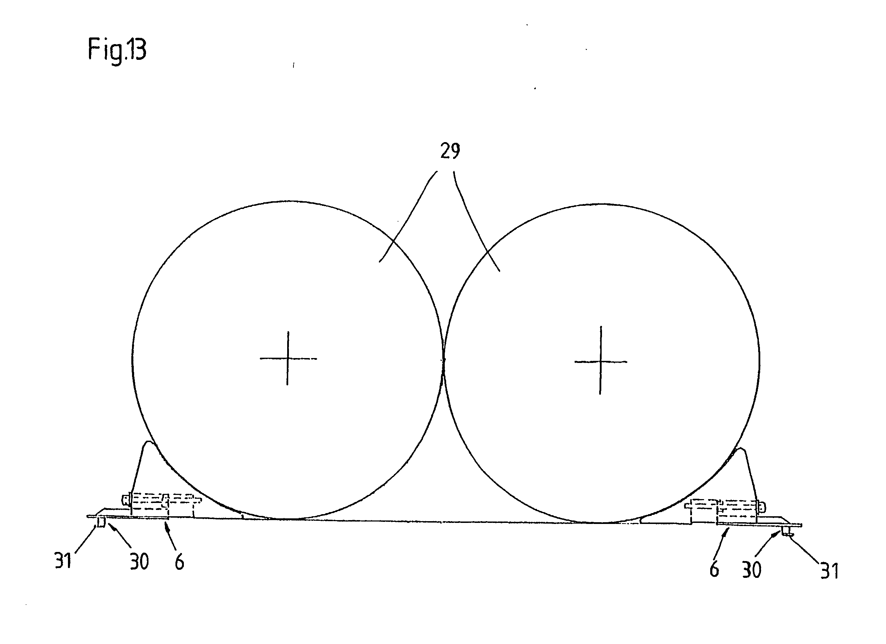

In der in Fig. 13 dargestellten Seitenansicht sind zwei Jumbo-Tiefdruckrollen 29 auf der Bodenplattform 3 mittels zweier Keile 6 nach einer Ausführungsform gemäß den Fig. 6 bis 12 gesichert. Die Überspannung der Tiefdruckrollen 29 durch die in Querrichtung Q verspannbaren Gurte 13 des Spanngurtsystems 7 sind in Fig. 13 nicht dargestellt. Wie anhand von Fig. 13 zu erkennen, ist die Trägerplatte 17 der Keile 6 mittels durch die Durchstecköffnungen 19 bzw. 20 in die Einstecköffnungen 5 bzw. 10 und 11 in der Bodenplattform 3 des Güterzugwagens 1 eingesteckten weiteren Verankerungssteckelementen 30 befestigt, welche mittels Sicherungselementen 31 in den Einstecköffnungen 5 bzw. 10 und 11 verankert sind. Aus Gründen der Übersichtlichkeit ist die Bodenplattform 3 nebst Einstecköffnungen 5 bzw. 10 und 11 des Güterzugwagens 1 in Fig. 13 nicht explizit dargestellt.

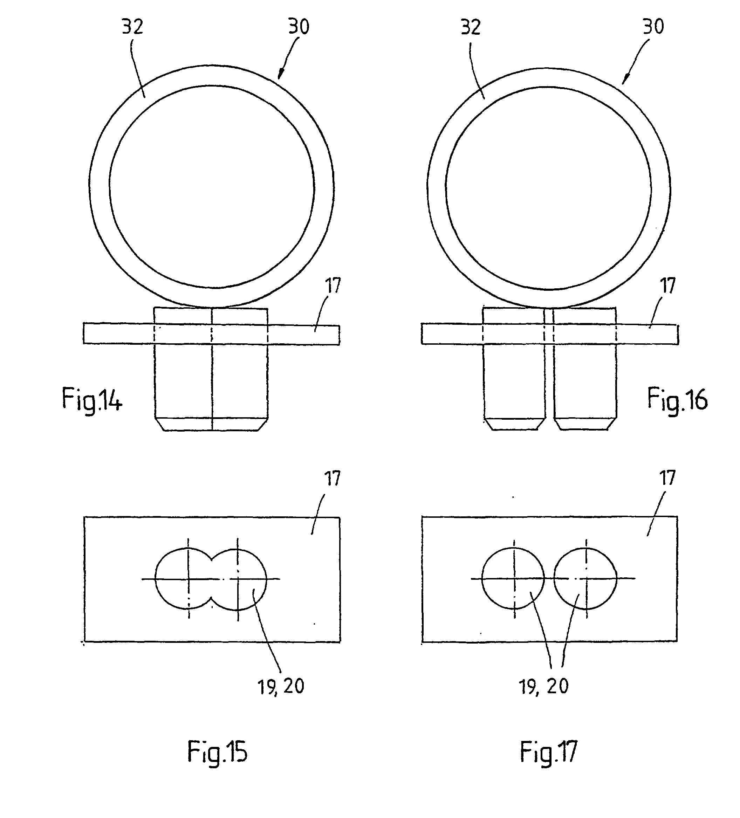

In den Fig. 14 und 15 bzw. 16 und 17 ist jeweils eine Ausführungsform der weiteren Verankerungssteckelemente 30 dargestellt, welche durch die Durchstecköffnungen 19, 20 der Trägerplatte 17 gesteckt sind. Wie anhand der Fign. 14 und 16 zu erkennen, weisen die bolzenförmig ausgebildeten weiteren Verankerungsstecketernente 30 jeweils einen als Griff dienenden Ring 32 auf, welcher ein vereinfachtes Einstecken bzw. Herausziehen der weiteren Verankerungssteckelemente 30 ermöglicht.

Die in den Fig. dargestellten Ausführungsformen der Erfindung dienen lediglich der Erläuterung und sind für diese nicht beschränkend.

### Bezugszeichenliste

- 1: Güterzugwagen
- 2: Laufwerk
- 3: Bodenplattform
- 4: Untergestell
- 5: Einstecköffnung
- 6: Keil
- 7: Spanngurtsystem
- 8: Längsseite
- 9: Längsseite
- 10: Einstecköffnung
- 11: Einstecköffnung
- 12: Öse
- 13: Gurt
- 14: Unterseite
- 15: Verankerungssteckelement
- 16: Oberseite
- 17: Trägerplatte
- 18: Verstelleinrichtung
- 19: Durchstecköffnung
- 20: Durchstecköffnung
- 21: Öffnung
- 22: Öffnung
- 23: Spindelstange
- 24: Führungsschiene
- 25: Führungsaufnahme
- 26: Gewindeabschnitt
- 27: Sicherungselement
- 28: Mutter
- 29: Tiefdruckrolle
- 30: Verankerungssteckelement
- 31: Sicherungselement
- 32: Ring
- 33: Keilelement
- 34: Ausnehmung

- Q: Querrichtung
- L: Längsrichtung

## Patentansprüche

1. Güterzugwagen (1) mit einem Laufwerk (2) und einem eine Bodenplattform (3) für das Transportgut aufweisenden Untergestell (4) sowie mit einer Einrichtung zur Ladungssicherung, wobei in der Bodenplattform (3) an beiden Längsseiten (8, 9) eine Mehrzahl von Einstecköffnungen (5) im Abstand zueinander ausgebildet und angeordnet sind, in denen in Querrichtung (Q) des Güterzugwagens (1) sich erstreckende, jeweils mit wenigstens einem Verankerungssteckelement (15) versehene Keile (6) formschlüssig angeordnet sind, die auf der Bodenplattform (3) aufliegen und zur schienenparallelen Halterung von Tiefdruckpapierrollen (29) bzw. gleichartigem rollenförmigen Transportgut ausgebildet sind, und daß vorzugsweise an der Bodenplattform (3) an beiden Längsseiten (8, 9) eine Mehrzahl von Halteeinrichtungen im Abstand zueinander für ein Spanngurtsystem (7) zur Sicherung der Tiefdruckpapierrollen (29) vorgesehen sind und wobei die Keile (6) jeweils eine auf der Bodenplattform (3) aufliegende und mit wenigstens einem Verankerungssteckelement (15) versehene Trägerplatte (17) aufweisen, auf welcher ein die Oberseite der Keile (6) ausbildendes Keilelement (33) über eine an der Trägerplatte (17) angeordnete Verstelleinrichtung (18) in Querrichtung (Q) des Güterzugwagens (1) verschiebbar geführt und an der Trägerplatte (17) arretierbar ist,
**dadurch gekennzeichnet,**
**dass** in der Trägerplatte (17) schienenparallel eine Mehrzahl von Durchstecköffnungen (19, 20) im Abstand zueinander ausgebildet und angeordnet sind, durch die weiteren Verankerungssteckelemente (30) in die Einstecköffnungen (5, 10, 11) des Güterzugwagens (1) zum Festlegen der Trägerplatte (17) steckbar sind.

2. Güterzugwagen nach Anspruch 1, **dadurch gekennzeichnet, dass** zu jeder Einstecköffnung (5) in Querrichtung (Q) zur Bodenplattform-Mitte hin weitere Einstecköffnungen (10, 11), vorzugweise zwei weitere Einstecköffnungen, vorhanden sind.

3. Güterzugwagen nach Anspruch 1 oder 2, **dadurch gekennzeichnet, dass** die Keile (6) unabhängig von ihrer Einsteckposition noch in sich in Querrichtung (Q) verstellbar sind.

4. Güterzugwagen nach einem der Ansprüche 1 bis 3, **dadurch gekennzeichnet, dass** die Verstelleinrichtung (18) eine Spindel ist, welche das die Oberseite ausbildende Keilelement (33) nach Art eines Schlittens auf der Trägerplatte (17) führt.

5. Güterzugwagen nach einem der Ansprüche 1 bis 4, **dadurch gekennzeichnet, dass** jede Einstecköffnung (5) durch ein in der Bodenplattform (3) bündig eingearbeitetes, nach unten sich erstreckendes Formrohr ausgebildet ist und als Verankerungssteckelement (15) an jedem Keil (6) ein dazu passendes Formrohr vorgesehen ist.

6. Güterzugwagen nach Anspruch 5, **dadurch gekennzeichnet, dass** der Querschnitt der Formrohre quadratisch ist.

7. Güterzugwagen nach Anspruch 5 oder Anspruch 6, **dadurch gekennzeichnet, dass** das Verankerungssteckelement (15) des Keils (6) an der Unterseite (14) des Keils (6) bzw. der Trägerplatte (17) des Keils (6) angeschweißt ist.

8. Güterzugwagen nach einem der Ansprüche 5 bis 7, **dadurch gekennzeichnet, dass** die Oberseite (16) des Keils (6) entsprechend der Rundung des Transportguts gebogen ist.

9. Güterzugwagen nach einem der Ansprüche 1 bis 8, **dadurch gekennzeichnet, dass** der Keil (6) aus Eisenwerkstoff besteht.

10. Güterzugwagen nach einem der Ansprüche 1 bis 9, **dadurch gekennzeichnet, dass** die Durchstecköffnungen (19, 20) über die Länge der Trägerplatte (17) ungleichmäßig verteilt sind.

11. Güterzugwagen nach einem der Ansprüche 1 bis 10, **dadurch gekennzeichnet, dass** die Halteeinrichtungen für das Spanngurtsystem (7) durch in der Bodenplattform (3) versenkbare Rollen oder Ösen (12) gebildet sind.

12. Güterzugwagen nach einem der Ansprüche 1 bis 11, **dadurch gekennzeichnet, dass** ein Spanngurt (13) mit einem Gurtverlauf ausschließlich oberhalb der Tiefdruckpapierrollen (29) in Querrichtung (Q) zur Ladungssicherung gespannt ist.

## Claims

1. A railway goods wagon (1) including a running gear (2) and a support structure (4) including a base platform (3) for the material to be transported and including a device for securing the load, a plurality of insertion openings (5) being formed and arranged at a distance from one another in both longitudinal sides (8, 9) of the base platform (3), form-lockingly arranged in which openings and extending in the transverse direction (Q) of the railway goods wagon (1) there are wedges (6) provided with at least one anchoring insertion element (15), which wedges rest on the base platform (3) and are constructed to retain gravure paper rolls (29) or similar roll-shaped material to be transported parallel to the rails and that a plurality of retaining devices are provided, preferably on both longitudinal sides (8, 9) of the base platform (3), at a spacing from one another for a tensioning belt system (7) to secure the gravure paper rolls (29) and wherein the wedges (6) have a respective support plate (17), which rests on the base platform (3) and is provided with at least one anchoring insertion element (15) and on which a wedge element (33), which affords the upper surface of the wedges (6), is guided, by means of an adjustment device (18) arranged on the support plate (17), so as to be movable in the transverse direction (Q) of the railway goods wagon (1), and is lockable to the support plate (17), **characterised in that** a plurality of insertion openings (19, 20) are formed and arranged at a spacing from one another in the support plate (17) parallel to the rails, through which further anchoring insertion elements (30) are insertable into the insertion openings (5, 10, 11) of the railway goods wagon (1) to fix the support plate (17) in position.

2. A railway goods wagon as claimed in Claim 1, **characterised in that** for each insertion opening (5), further insertion openings (10, 11), preferably two further insertion openings, are present in the transverse direction (Q) towards the centre of the base platform.

3. A railway goods wagon as claimed in Claim 1 or 2, **characterised in that** the wedges (6) are movable in the transverse direction (Q) independently of their insertion position.

4. A railway goods wagon as claimed in one of Claims 1 to 3, **characterised in that** the adjustment device (18) is a spindle, which guides the wedge element (33), affording the upper surface, on the support plate (17) in the manner of a sliding carriage.

5. A railway goods wagon as claimed in one of Claims 1 to 4, **characterised in that** each insertion opening (5) is constituted by a shaped tube, which extends downwardly and is worked flush into the base platform (3) and a shaped tube which fits it is provided as an anchoring insertion element (15) on each wedge (6).

6. A railway goods wagon as claimed in Claim 5, **characterised in that** the cross-section of the shaped tubes is rectangular.

7. A railway goods wagon as claimed in Claim 5 or Claim 6, **characterised in that** the anchoring insertion element (15) on the wedge (6) is welded to the underside (14) of the wedge (6) or of the support plate (17) of the wedge (6).

8. A railway goods wagon as claimed in one of Claims 5 to 7, **characterised in that** the upper surface (16) of the wedge is curved in a manner corresponding to the curvature of the material to be transported.

9. A railway goods wagon as claimed in one of Claims 1 to 8, **characterised in that** the wedge (6) consists of iron material.

10. A railway goods wagon as claimed in one of Claims 1 to 9, **characterised in that** the insertion openings (19, 20) are non-uniformly distributed over the length of the support plate (17).

11. A railway goods wagon as claimed in one of Claims 1 to 10, **characterised in that** the retaining devices for the tensioning belt system (7) are constituted by rollers or eyes (12), which may be recessed into the base platform (3).

12. A railway goods wagon as claimed in one of Claims 1 to 11, **characterised in that** a tensioning belt (13) is stretched in the transverse direction (Q) to secure the load with the belt extending exclusively above the gravure paper rolls (29).

## Revendications

1. Wagon de train de marchandises (1) comprenant un train de roulement (2) et un châssis (4) comportant une plate-forme inférieure (3) pour la marchandise transportée ainsi qu'un dispositif destiné à la fixation du chargement, une pluralité d'orifices d'emboîtement (5) étant formée à distance les uns des autres et étant disposée dans la plate-forme inférieure (3) sur les deux côtés longitudinaux (8, 9), orifices dans lesquels. sont disposées par engagement positif des clavettes (6) dotées respectivement d'au moins un élément emboîtable de fixation (15), s'étendant dans la direction transversale (Q) du wagon de train de marchandises (1), lesquelles clavettes se situent sur la plate-forme inférieure (3) et sont conçues pour la fixation parallèle aux rails de rouleaux de papier héliographique (29) ou d'une marchandise transportée sous forme de rouleaux similaire, et en ce qu'une pluralité de dispositifs de retenue à distance les uns des autres pour un système de courroie de tension (7) en vue de la fixation des rouleaux de papier héliographique (29) est prévue de préférence sur la plate-forme inférieure (3) sur les deux côtés longitudinaux (8, 9) et les clavettes (6) comprenant respectivement une plaque de support (17) située sur la plate-forme inférieure (3) et dotée d'au moins un élément emboîtable de fixation (15), plaque sur laquelle est guidé de manière mobile, dans la direction transversale (Q) du wagon de train de marchandises (1), un élément formant clavette (33) formant le côté supérieur des clavettes (6), par l'intermédiaire d'un dispositif de réglage (18) disposé sur la plaque de support (17), et qui peut être bloqué sur la plaque de support (17),
**caractérisé en ce que**
une pluralité d'orifices emboîtables de passage (19, 20) est formée à distance les uns des autres et disposée dans la plaque de support (17) de manière parallèle aux rails, peut être emboîté grâce aux autres éléments emboîtables de fixation (30) dans les orifices d'emboîtement (5, 10, 11) du wagon de train de marchandises (1) en vue de la fixation de la plaque de support (17).

2. Wagon de train de marchandises selon la revendication 1, **caractérisé en ce que** pour chaque orifice d'emboîtement (5), d'autres orifices d'emboîtement (10, 11), de préférence deux autres orifices d'emboîtement, sont présents dans la direction transversale (Q) du côté du centre de la plate-forme inférieure.

3. Wagon de train de marchandises selon la revendication 1 ou 2, **caractérisé en ce que** les clavettes (6) peuvent être réglées dans la direction transversale (Q) indépendamment de leur position d'emboîtement encore en soi.

4. Wagon de train de marchandises selon l'une dés revendications 1 à 3, **caractérisé en ce que** le dispositif de réglage (18) est une broche, laquelle guide l'élément formant clavette (33) formant le côté supérieur sur la plaque de support (17) à la façon d'un chariot.

5. Wagon de train de marchandises selon l'une des revendications 1 à 4, **caractérisé en ce que** chaque orifice d'emboîtement (5) est enfoncé à travers un tube moulé inséré à surface plane dans la plate-forme inférieure (3), s'étendant vers le bas et un tuyau moulé s'adaptant audit orifice est prévu comme élément emboîtable de fixation (15) sur chaque clavette (6).

6. Wagon de train de marchandises selon la revendication 5, **caractérisé en ce que** la section des tuyaux moulés est carrée.

7. Wagon de train de marchandises selon la revendication 5 ou la revendication 6, **caractérisé en ce que** l'élément emboîtable de fixation (15) de la clavette (6) est soudé au côté inférieur (14) de la clavette (6) ou à la plaque de support (17) de la clavette (6).

8. Wagon de train de marchandises selon l'une des revendications 5 à 7, **caractérisé en ce que** le côté supérieur (16) de la clavette (6) est courbé en fonction de la courbure de la marchandise transportée.

9. Wagon de train de marchandises selon l'une des revendications 1 à 8, **caractérisé en ce que** la clavette (6) est constituée de matériau ferreux.

10. Wagon de train de marchandises selon l'une des revendications 1 à 9, **caractérisé en ce que** les orifices emboîtables de passage (19, 20) sont répartis de manière irrégulière sur la longueur de la plaque de support (17).

11. Wagon de train de marchandises selon l'une des revendications 1 à 10, **caractérisé en ce que** les dispositifs de retenue pour le système de courroie de tension (7) sont formés par des rouleaux ou des boucles (12) pouvant être enfoncé(e)s dans la plate-forme inférieure (3).

12. Wagon de train de marchandises selon l'une des revendications 1 à 11, **caractérisé en ce qu'**une courroie de tension (13) est tendue avec un écoulement de courroie exclusivement au-dessus des rouleaux de papier héliographique (29) dans la direction transversale (Q), en vue de la fixation du chargement.
